# EUROPEAN PATENT APPLICATION

(11) **EP 4 821 574 A1**
(43) Date of publication of application: **14.10.2026**
(21) Application number: 25168948.5
(22) Date of filing: 07.04.2025
(51) Int. Cl.: A63F 13/35, A63F 13/53, A63F 13/70

(54) **METHODS AND NETWORK ENTITIES FOR PROVIDING ONLINE GAME TO MULTIPLE USERS**

(71) Applicant: Cult of the North AB, 118 25 Stockholm (SE)
(72) Inventor: Odervall, Albin, 12952 Hägersten (SE)
(74) Representative: Bergenstråhle & Partners AB

(57) **Abstract**

A method performed by a network entity (800), the method comprises: dividing a map (100) of the online game evenly into multiple grids (101, 102), each grid (101) comprises at least one object (310) of the map (100), identity of each object (310) and associated attribute thereof in one grid (101) form at least one object group (901); storing, in a first memory unit (201), the group identification (901) and an indication of a storing address; storing the object group information in the second memory unit (300) according to the storing address, the object group information is stored in an information structure (370) comprising at least one column (350), each column (350) comprises the object identity (310) and the associated attribute (311, 312) thereof, wherein each column (350) occupies a sub-unit of the second memory unit (300).

## Description

### TECHNICAL FIELD

The present disclosure relates generally to methods and network entities for providing online game to multiple users. The present disclosure further relates to computer programs and carriers corresponding to the methods and network entities.

### BACKGROUND

An online game or a network game is a game that is either partially or primarily played through the Internet or any other computer network available. On the user side, online games can be played on gaming platforms, including PCs, consoles and mobile devices. On the game provider side, the online game can be conducted on a server which has network connections with the user gaming platforms.

As the number of online game users grows, the game server is under increasing pressure, i.e., the game server needs to provide lag-free service to multiple users simultaneously.

In prior art, the online game can be deployed onto multiple servers, so as to decrease pressure on individual servers to meet the above requirement. However, since the multiple servers need to cooperate to provide a common online game, the operational cost increases, and the overhead of each server also increases, resulting in a decrease in the overall efficiency.

Thus, it is desired to deploy the whole game on a single server, even when the number of users is high, e.g., over 1000 users. This puts a high demand on the capacity and efficiency of the server.

Therefore, there is a need to provide a solution for increasing the server's efficiency, including the efficiency of accessing and processing the online game data.

### SUMMARY

As discussed above, a technical problem of the prior art is that it is lacking a mechanism to improve the efficiency of an online game server. It is an object of the invention to provide a solution for increasing the server's efficiency, including the efficiency of accessing and processing online game data. It is possible to achieve the object and other objects by using the methods, the network entities and computer programs described herein as defined in the attached claims.

According to one aspect, a method performed by a network entity which provides an online game to multiple user terminals is disclosed. The method comprises: dividing a map of the online game evenly into multiple grids, each grid comprises at least one object of the map, each object is associated with at least one attribute; each object having an identity, the identity of each object and associated attribute thereof in one grid form at least one object group with a group identification, the object group is associated with the grid; storing, in a first memory unit of the network entity, the group identification and an indication of a storing address of an object group information, the storing address indicating an address of a second memory unit of the network entity; storing the object group information in the second memory unit according to the storing address, the object group information comprises the identity of each object of the object group and the associated attribute thereof, the object group information is stored in an information structure comprising at least one column, each column comprises the object identity and the associated attribute thereof, wherein each column occupies a sub-unit of the second memory unit.

According to another aspect, a network entity for providing an online game to multiple user terminals is disclosed. The network entity comprises a communication unit, a processing circuitry and a memory, said memory containing instructions executable by said processing circuitry, whereby the network entity is operative to: divide a map of the online game evenly into multiple grids, each grid comprises at least one object of the map, each object is associated with at least one attribute; each object having an identity, the identity of each object and associated attribute thereof in one grid form at least one object group with a group identification, the object group is associated with the grid; store, in a first memory unit of the memory of the network entity, the group identification and an indication of a storing address of an object group information, the storing address indicating an address of a second memory unit of the memory of the network entity; store the object group information in the second memory unit according to the storing address, the object group information comprises the identity of each object of the object group and the associated attribute thereof, the object group information is stored in an information structure comprising at least one column, each column comprises the object identity and the associated attribute thereof, wherein each column occupies a sub-unit of the second memory unit.

According to other aspects, computer programs and carriers are also provided, the details of which will be described in the claims and the detailed description.

With the solutions in the application, the efficiency of the game server is improved. Further possible features and benefits of this solution will become apparent from the detailed description below.

### BRIEF DESCRIPTION OF DRAWINGS

The solution will now be described in more detail by means of exemplary embodiments and with reference to the accompanying drawings, in which:
Fig .1 is a schematic diagram of an online game arrangement.
Fig. 2 is a schematic diagram of a map of the online game.
Fig. 3 is a schematic diagram of the present invention, according to exemplary embodiments.
Fig. 4 is a flow chart illustrating a method performed by a network entity, according to exemplary embodiments.
Fig. 5 is a block diagram illustrating the network entity in more detail, according to exemplary embodiments.

### DETAILED DESCRIPTION

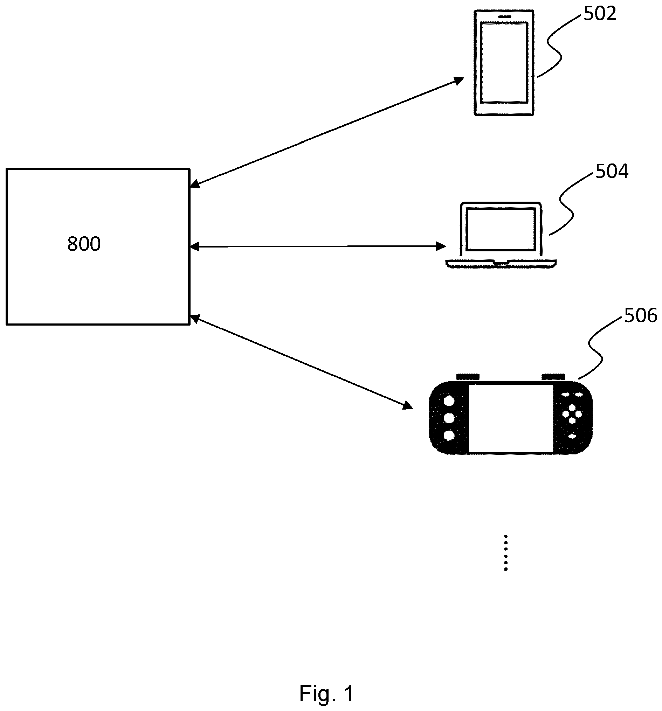

Referring to fig. 1, a network entity 800 which works as an online game server is providing an online game to users with different types of user terminals, e.g., a mobile phone 502, a computer 504, a console 506. The user terminal which is used to play the online game provided by the network entity 800 may also be other types. The user terminal may be any type of device capable of communicating with the network entity 800 and providing an online game interface to the user. For example, the user terminal may also be a User Equipment (UE), a tablet, a mobile terminal, a smart phone, a laptop embedded equipment (LEE), a laptop mounted equipment (LME).

A network entity 800 is arranged to be communicatively connected to the user terminals 502, 504, 506. The network entity 800 may be any kind of network device which can work as a server to simultaneously provide an online game to the multiple user terminals 502, 504, 506. The communication between the network entity 800 and the user terminals 502, 504, 506 can be any possible kind of communication, e.g., wireless communication, wired communication.

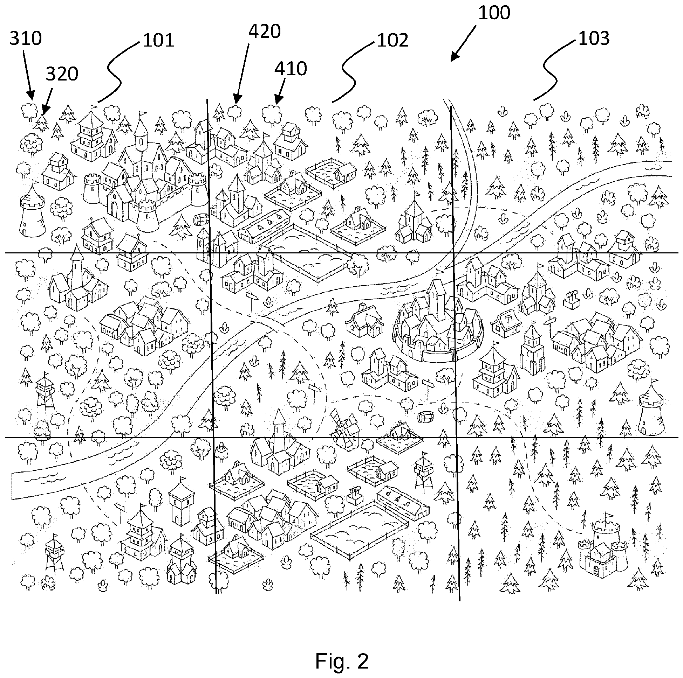

Referring to fig. 2, a map 100 of the online game is provided by the network entity 800. The network entity 800 can provide the map 100 in the online game to multiple users via user interfaces of the user terminals 502, 504, 506, so that the users can interact with the online game or other users of the game on the map 100.

The world of the online game is shown on the map 100. The term "world" refers to a virtual environment in the online game where every connected user/player can see and interact with all the other connected users/plays and/or things provided by the online game. The map 100 is a collection of all things or objects in the world, e.g. trees, rocks, as well as a collection of the terrain in the world, e.g., rivers, mountains. The map 100 may comprise one or more objects 310, 320, 410, 420 thereon. The term "object" refers to anything which appears on the map 100, for example 310, 320, 410, 420 are trees in fig. 2. For other examples, the object can be a tree, a rock, a river, a building, a castle; the object can also be an animal, a person, a monster, etc. The person appears on the map 100 can be the person which represents the users of the online game, or provided by the online game, e.g., non-player character. The object can also be other things which appear in the map 100 of the online game world, even if it is not shown in fig. 2. The object can be static or moveable. The map 100 and all the objects thereon can be provided by the network entity 800 to the multiple user terminals 502, 504, 506, so that the users can look at or interact with the objects on the map 100.

As discussed in Background it is desired to use a single server, i.e., a single network entity 800 to provide the online game to all users. When the number of the users increases, the pressure of the network entity 800 increases. Furthermore, when the number of the users increases, it is likely that the number of the objects on the map 100 is also increasing. For example, when the number of the users increases, the number of people on the map 100 which represents the users also increases. It is also possible that the number of monsters on the map 100 increases, with the growth of the number of users. The people and monsters on the map 100 are objects, therefore, the number of the objects increase when the number of users increases.

Each object may be associated with one or more attribute, e.g., position on the map, moving speed. With the growth of the objects number, the number of attributes also grows. When the user is playing the online game, the user terminal performs interactions with the server, e.g., accesses the objects on the map, accesses the attributes of the objects, changes the attributes of the objects. For example, if a user moves a rock on the map, the user accesses the rock as an object and changes its position attribute. When the position attribute of the rock is updated by the user, the rock appears in the new position on the map, according to its updated position attribute.

The objects and related attributes are stored in a memory of the network entity 800. When the user accesses the object and interacts with the object via user terminals 502, 504, 506, the user terminal 502, 504, 506 actually gives an instruction to the network entity 800 to access and change the objects and/or their attributes stored in the network entity 800 memory. It is a challenge for the network entity 800 to find, access or change the objects and attributes if there is a large number of objects and attributes which are stored in the memory.

Therefore, there is a need to increase the efficiency of the network entity 800 when the number of objects increases, especially to increase the efficiency of the network entity 800 to access and change the objects and associated attributes, which are stored in the memory.

There are two ways in prior art to increase the efficiency of the network entity 800 when the object number increases. The first one is to categorize the objects on the map 100. The objects can be categorized in a hierarchical structure. For example, the objects are firstly categorized into rock, plant, animal, etc. Objects of each category, e.g., the objects belonging to the plant category can be further categorized into sub-categories, e.g., pine, rose. Similarly, the objects belonging to the animal category can be further categorized into sub-categories, e.g., birds, dogs. The objects and associated attributes are stored in the memory based on the categories and sub-categories, e.g., objects which belong to the same sub-category have adjacent storing address in the memory for storing their identities and attributes. Therefore, the network entity 800 can access and update the attributes of corresponding objects according to the hierarchical structure, which enhances efficiency.

The disadvantage of the above solution is that it is quite troublesome to define and/or maintain the hierarchical structure. Furthermore, the more objects that exist on the map 100, the more complicated the hierarchical structure becomes, resulting in a decreased efficiency.

Another solution to increase the efficiency is also categorizing the objects on the map 100, however without hierarchical structure, but rather dynamically based on the attributes of the object possesses at runtime. Contrary to the first solution explained above where the hierarchical structure of categorization is predefined, the categorization structure of this solution is defined automatically at runtime as attributes are added, removed, and modified on objects. This allows objects to transform from one type to another, e.g. by removing, adding, and modifying enough attributes of a rock, it can turn into a wolf.

This solution is flexible, however requires the server to be able to understand and modify a large number of the attributes of objects at runtime, leading to lots of complex memory operations and thus inefficient.

The core idea of the present disclosure is to perform a spatial partitioning on the map 100, so that the map 100 is divided into multiple grids, and that the objects on the map 100 also are divided into multiple grids. The objects and attributes thereof in each grid form one or more groups, and each group occupies a memory unit, so that the objects and attributes thereof which belong to the same group and the same grid on the map 100 are stored at addresses in the same memory unit.

Therefore, the objects which are close to each other on the map 100 have their attributes stored at addresses close to each other in the memory. Due to nature of an online game, it is very likely that attributes of objects close to each other need to be changed simultaneously or within a short period of time. In other words, when attributes of an object need to be accessed and/or modified, it is very likely that attributes of objects which are close to the object also need to be accessed and/or changed. For example, if a person on the map 100 carries a rock from one position to another position, the position attributes of the person and the rock need to be changed simultaneously. Since the position attributes of the person and the rock are stored in the same memory unit, i.e., not far away from each other, they can be accessed and changed together by a processor of the network entity 800, instead of firstly finding, accessing and updating the person position attribute in one place in the memory, then finding, accessing and updating the rock position attribute in another place which is far away in the memory. Once the position attributes of the person and the rock are updated, the rock and the person presented on the map 100 also have updated positions, so that the user can see them at a different position on the map 100. Thus, the overall efficiency of the network entity 800 is improved.

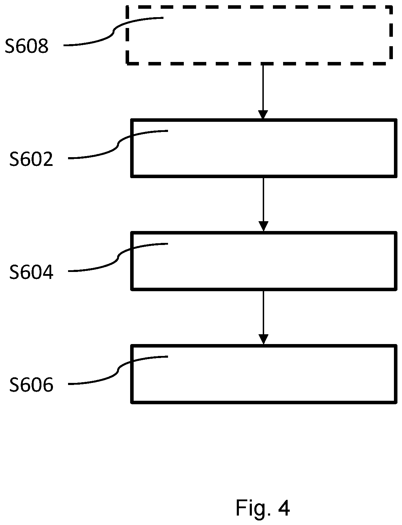

Referring to figs. 2-4, a method performed by a network entity 800 which provides an online game to multiple user terminals 502, 504, 506 is disclosed. The method comprises: dividing S602 a map 100 of the online game evenly into multiple grids 101, 102, 103, 104, 105, 106, 107, 108, 109, each grid 101 comprises at least one object 310, 320 of the map 100, each object 310, 320 is associated with at least one attribute 311, 312, 321, 322; each object 310, 320 having an identity, the identity of each object 310, 320 and associated attribute thereof in one grid 101 form at least one object group with a group identification, the object group is associated with the grid 101; storing S604, in a first memory unit 201 of the network entity 800, the group identification and an indication of a storing address of an object group information, the storing address indicating an address of a second memory unit 300 of the network entity 800; storing S606 the object group information in the second memory unit 300 according to the storing address, the object group information comprises the identity of each object 310, 320 of the object group and the associated attribute 311, 312, 321, 322 thereof, the object group information is stored in an information structure 370 comprising at least one column 350, 360, each column 350, 360 comprises the object identity 310, 320 and the associated attribute 311, 312, 321, 322 thereof, wherein each column 350, 360 occupies a sub-unit of the second memory unit 300.

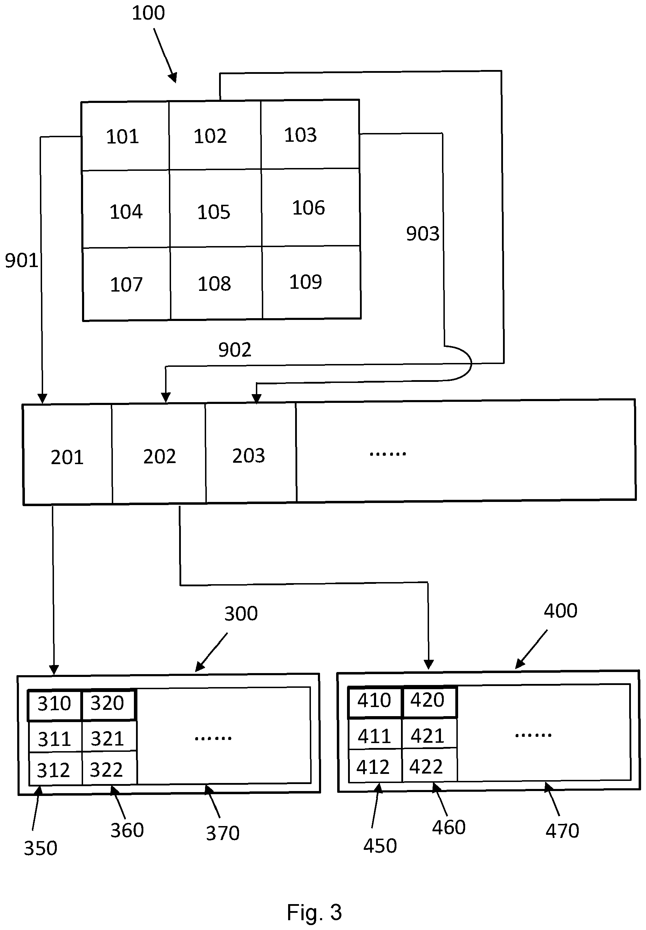

In the dividing step S602, the map 100 is evenly divided into multiple grids. In the example shown in fig. 2 and fig. 3, the map 100 is evenly divided into nine grids, namely 101, 102, 103, 104, 105, 106, 107, 108, 109. The number of the grids can be changed, depending on the size of the map 100 and number of the objects. For example, if the size of the map 100 is large and/or the number of the objects is high, more grids can be created. When the map 100 is divided, the objects on the map 100 are also divided into the different grids. As fig. 2 shows, objects 310 and 320 are comprised in the grid 101, and objects 410, 420 are comprised in the grid 102.

Each object 310, 320, 410, 420 on the map 100 is associated with at least one attribute. The attribute may be e.g., position of the object, moving speed of the object. Different objects may be associated with different attributes. For example, an object as a person can associate with a "jumping frequency" attribute, indicating an allowed maximum jumping frequency of the person. For another example, an object as a house can be associated with a "whether entry allowed" attribute, indicating if the house is allowed to be entered. Each object also has an identity, e.g., 310, 320, 410, 420, each identity should be unique on the map 100. The object identity and the at least one attribute of the object are associated together, defining the object.

Each grid comprises one or more objects. These objects' identities and attributes thereof form at least one object group, the size of the object group is predefined. For example, the grid 101 comprises 30 objects, and the predefined size of the object group is 50, therefore the 30 objects of the grid 101 form an object group, with a group identification 901. The object group 901 is associated with the grid 101. The object group 901 comprises the 30 object identities and attributes thereof. For another example, the grid 101 comprises 80 objects, and the predefined size of the object group is 50, therefore the 80 objects and attributes thereof form two object groups, with respective group identifications. One object group comprises 50 objects and attributes thereof, and the other object group comprises 30 objects and attributes thereof. The two object groups are associated with the grid 101. As fig. 3 shows, the grid 101 is associated with the object group 901, the grid 102 is associated with the object group 902, and the grid 103 is associated with the object group 903. As discussed above, each grid can be associated with one or more object group. Even not shown in fig. 3, each of the grids 104, 105, 106, 107, 108, 109 can be associated with respective one or more object group.

In the storing step S604, the group identification and an indication of a storing address of an object group information are stored in a first memory unit 201. In fig. 3, the group identification 901 is stored in the first memory unit 201. Besides, an indication of the storing address of the object group information is also stored in the first memory 201. The object group information refers to the information of the objects' identities and attributes thereof of the object group 901; in other words, the object group information refers to the content of the object group. The storing address indicates an address of a second memory unit 300, where the information of the object group 901 is stored. In other words, the information, i.e., objects' identities and attributes thereof, of the object group 901 is stored in the second memory unit 300. An indication of the storing address is stored in the first memory unit 201, i.e., the indication in the first memory unit 201 works as a pointer, which points to the "real" storing address 300 of the information of the object group 901. Similarly, the group identification 902 and an indication to memory unit 400 is stored in the memory unit 202. The memory unit 400 stores the objects' identities and associated attributes of the object group 902, i.e., the information of the object group 902.

In the storing step 606, the object group information, i.e., the objects' identities and attributes thereof, is stored in the second memory unit. As fig. 3 shows, the object identity 310 of the object group 901 is stored in the second memory unit 300, and two attributes 311, 312 of the object 310 are stored in the second memory unit 300 as well. Similarly, the object identity 320 of the object group 901 and its attributes 321, 322 are also stored in the second memory unit 300. The information of the object group 901 is stored in an information structure 370 which comprises one or more columns, e.g., columns 350 and 360 in fig. 3. Each column comprises one object identity and its attributes. For example, column 350 comprises object identity 310 and its attributes 311 and 312; column 360 comprises object identity 320 and its attributes 321, 322. In short, one object identity and its attributes occupy one column of the information structure 370.

Similarly, the information of the object group 902 is also stored in an information structure 470. The information structure 470 comprises columns 450, 460. The column 450 comprises object identity 410 and its attributes 411, 412; the column 460 comprises object identity 420 and its attributes 421, 422. In implementation, the columns 350, 360, 450, 460 can be an array respectively, and the information structure 370, 470 can be a collection of arrays respectively.

Each column 350, 360 of the information structure 370 occupies a sub-unit of the second memory unit 300, and the whole information structure 370 occupies the whole second memory unit 300. As for the internal addresses/sequence of the sub-units within the second memory unit 300, it may depend on an order/sequence of adding or removing the objects of the grid 101. For example, as shown in fig. 3, the object 310 is the first object of the grid 101 which is added to map 100, and the object 320 is the second object of the grid 101 which is added to the map 100. Therefore the column 350 which is corresponding to the object 310 and its attributes 311, 312 occupies a first sub-unit of the second memory unit 300, and the column 360 which is corresponding to the object 320 and its attributes 321, 322 occupies a second sub-unit of the second memory unit 300 which is adjacent to the first sub-unit. For another example, if multiple other objects are added to the grid 101 of the map 100 after firstly adding the object 310, then the object 320 is added to the grid 101, the column corresponding to the object 320 may occupy a sub-unit which is in a middle part of the second memory unit 300, after the sub-units corresponding to the multiple objects added in between. When an object is removed from a sub-unit of the second memory unit 300, i.e., removed from the grid 101, a newly added object of the grid 101 can occupy the sub-unit corresponding to the removed object. Other arrangements of the sub-units of the second memory unit 300 are also applicable, as long as the information of one object group is stored in the same memory unit.

By this embodiment, the identities and attributes of the objects within in one grid form at least one object group and information of each object group occupies one memory unit, in an information structure that each object identity and its attribute form one column, thereby occupies one sub-unit of the memory unit. In this way, the attributes of the objects which belong to one grid are stored in one memory unit, which makes it easier for the processor to access multiple objects in one grid and update their attributes. For an example, a user in the online game cuts two close by trees 310, 320 in succession, resulting in that the "height" attributes of the two trees 310, 320 need to be updated. The processor of the network entity 800 can easily access the two "height" attributes in the second memory unit 300. The processor can update the "height" attributes promptly and present updated trees on the map to the user.

Furthermore, each object identity and its attributes occupy one sub-unit of the second memory unit, therefore provides a clear structure of attributes storage, improving the efficiency of accessing attributes of certain objects.

According to other embodiments, the columns 350, 360 of the information structure of the object group occupy consecutive sub-units of the second memory unit 300.

By this embodiment, it is guaranteed that the second memory unit 300 is dedicated to the information structure 370, i.e., to the information of the object group 901 of the grid 101. No other unrelated information will be stored in the second memory unit 300. It further simplifies the accessing and updating of attributes in the object group 901.

According to other embodiments, the method further comprises dividing S608 objects 310, 320 into categories, wherein each category is associated with a specific set of attributes 311, 312, 321, 322.

According to other embodiments, the map 100 is related to at least one category of objects.

When the number of the objects increases, the complexity of maintaining the map 100 also increases significantly. Therefore, the map 100 can relate to at least one category of objects, instead of relating to all categories of objects, therefore lowering the complexity. The spatial partitioning can be applied to each map which relates to different categories of objects. By combining multiple maps which relate to different categories of objects, a comprehensive map is obtained.

According to other embodiments, the at least one attribute comprises moving velocity of the object 310, 320 on the map 100 and/or position of the object 310, 320 on the map 100.

According to other embodiments, the map 100 relates to one user terminal 502.

In this embodiment, each user terminal 502, 504, 506 may be provided with individual map. Therefore, the map 100 can relate to one user.

By the embodiments defined above, the process that objects interacting with each other within the grid 101 is efficient because their attributes are stored in one second memory unit 300, i.e., the attributes are stored close to each other. According to other embodiments, when an object in the grid 101 needs to interact with another object in a different grid, e.g., interact with an object in the grid 106, the attributes of the object in the grid 106 need to be accessed and possibly modified. As discussed in previous text, when attributes of an object need to be accessed and/or modified, it is very likely that attributes of objects which are close to the object also need to be accessed and/or changed. Therefore, when an object in the grid 101 interact with an object in the grid 106, it is likely that attributes of multiple objects in the grid 106 need to be accessed and/or changed, the multiple objects in the grid 106 are objects which are close to the object which interacts with the object in the grid 101. For example, the object in the grid 101 is a rock; the rock flies to the grid 106 and firstly hits one tree in the grid 106. However, due to the size of the rock, it knocks down multiple trees in the grid 106 which are surrounding the tree being hit. The "height" attributes of the multiple trees in the grid 106 need to be accessed and modified simultaneously. Since the attributes of the multiple trees in the grid 106 are also stored in the same memory unit which is similar to the second memory unit 300, the "height" attributes of the multiple trees in the grid 106 can be accessed and modified easily.

According to other embodiments, a network entity 800 for providing an online game to multiple user terminals 502, 504, 506 is disclosed. The network entity 800 comprising a communication unit 802, a processing circuitry 803 and a memory 804, said memory 804 containing instructions executable by said processing circuitry 803, whereby the network entity 800 is operative to: divide a map 100 of the online game evenly into multiple grids 101, 102, 103, 104, 105, 106, 107, 108, 109, each grid 101 comprises at least one object 310, 320 of the map 100, each object 310, 320 is associated with at least one attribute 311, 312, 321, 322; each object 310, 320 having an identity, the identity of each object 310, 320 and associated attribute thereof in one grid 101 form at least one object group with a group identification 901, the object group is associated with the grid 101; store, in a first memory unit 201 of the memory 804 of the network entity 800, the group identification 901 and an indication of a storing address of an object group information, the storing address indicating an address of a second memory unit 300 of the memory 804 of the network entity 800; store the object group information in the second memory unit 300 according to the storing address, the object group information comprises the identity of each object 310, 320 of the object group and the associated attribute 311, 312, 321, 322 thereof, the object group information is stored in an information structure 370 comprising at least one column 350, 360, each column 350, 360 comprises the object identity 310, 320 and the associated attribute 311, 312, 321, 322 thereof, wherein each column 350, 360 occupies a sub-unit of the second memory unit 300.

According to other embodiments, the network entity 800 is further operative to perform the method defined any one of previous embodiments.

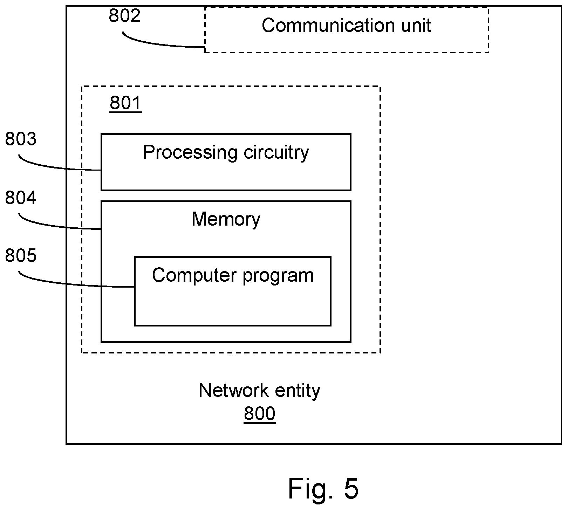

According to other embodiments in fig. 5, the network entity 800 may further comprise a communication unit 802, which may be considered to comprise conventional means for communication with the user terminals, such as a transceiver for transmission and reception of signals. The network entity 800 also comprises processing circuitry 803 and a memory 804. Instructions executable by said processing circuitry 803 may be arranged as a computer program 805 stored e.g., in said memory 804. The processing circuitry 803 and the memory 804 may be arranged in a sub-arrangement 801. The sub-arrangement 801 may be a microprocessor and adequate software and storage therefore, a Programmable Logic Device, PLD, or other electronic component(s)/processing circuit(s) configured to perform the method mentioned above. The processing circuitry 803 may comprise one or more programmable processors, application-specific integrated circuits, field programmable gate arrays or combinations of these adapted to execute instructions.

The computer program 805 may be arranged such that when its instructions are run in the processing circuitry 803, they cause the network entity 800 to perform the steps described in any of the described exemplary embodiments of the network entity 800 and its method. The computer program 805 may be carried by a computer program product connectable to the processing circuitry 803. The computer program product may be the memory 804 or at least arranged in the memory. The memory 804 may be realized as for example a RAM (Random-access memory), ROM (Read-Only Memory) or an EEPROM (Electrical Erasable Programmable ROM). In some embodiments, a carrier may contain the computer program 805. The carrier may be one of an electronic signal, an optical signal, an electromagnetic signal, a magnetic signal, an electric signal, a radio signal, a microwave signal, or computer readable storage medium. The computer-readable storage medium may be e.g., a CD, DVD or flash memory, from which the program could be downloaded into the memory 804. Alternatively, the computer program may be stored on a server or any other entity to which the network entity 800 has access via the communication unit 802. The computer program 805 may then be downloaded from the server into the memory 804.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." Further, the term "a number of", such as in "a number of wireless devices" signifies one or more devices. All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a network entity (800) which provides an online game to multiple user terminals (502, 504, 506), the method comprises:
dividing (S602) a map (100) of the online game evenly into multiple grids (101, 102, 103, 104, 105, 106, 107, 108, 109), each grid (101) comprises at least one object (310, 320) of the map (100), each object (310, 320) is associated with at least one attribute (311, 312, 321, 322); each object (310, 320) having an identity, the identity of each object (310, 320) and associated attribute thereof in one grid (101) form at least one object group with a group identification (901), the object group is associated with the grid (101);
storing (S604), in a first memory unit (201) of the network entity (800), the group identification (901) and an indication of a storing address of an object group information, the storing address indicating an address of a second memory unit (300) of the network entity (800);
storing (S606) the object group information in the second memory unit (300) according to the storing address, the object group information comprises the identity of each object (310, 320) of the object group and the associated attribute (311, 312, 321, 322) thereof, the object group information is stored in an information structure (370) comprising at least one column (350, 360), each column (350, 360) comprises the object identity (310, 320) and the associated attribute (311, 312, 321, 322) thereof, wherein each column (350, 360) occupies a sub-unit of the second memory unit (300).

2. The method according to claim 1, wherein the columns (350, 360) of the information structure of the object group occupy consecutive sub-units of the second memory unit (300).

3. The method according to any one of claims 1-2, further comprising dividing (S608) objects (310, 320) into categories, wherein each category is associated with a specific set of attributes (311, 312, 321, 322).

4. The method according to claim 3, wherein the map (100) is related to at least one category of objects.

5. The method according to any one of claims 1-4, wherein the at least one attribute comprises moving velocity of the object (310, 320) on the map (100) and/or position of the object (310, 320) on the map (100).

6. The method according to any one of claims 1-5, wherein the map (100) relates to one user terminal (502).

7. A network entity (800) for providing an online game to multiple user terminals (502, 504, 506), the network entity (800) comprising a communication unit (802), a processing circuitry (803) and a memory (804), said memory (804) containing instructions executable by said processing circuitry (803), whereby the network entity (800) is operative to:
divide a map (100) of the online game evenly into multiple grids (101, 102, 103, 104, 105, 106, 107, 108, 109), each grid (101) comprises at least one object (310, 320) of the map (100), each object (310, 320) is associated with at least one attribute (311, 312, 321, 322); each object (310, 320) having an identity, the identity of each object (310, 320) and associated attribute thereof in one grid (101) form at least one object group with a group identification (901), the object group is associated with the grid (101);
store, in a first memory unit (201) of the memory (804) of the network entity (800), the group identification (901) and an indication of a storing address of an object group information, the storing address indicating an address of a second memory unit (300) of the memory (804) of the network entity (800);
store the object group information in the second memory unit (300) according to the storing address, the object group information comprises the identity of each object (310, 320) of the object group and the associated attribute (311, 312, 321, 322) thereof, the object group information is stored in an information structure (370) comprising at least one column (350, 360), each column (350, 360) comprises the object identity (310, 320) and the associated attribute (311, 312, 321, 322) thereof, wherein each column (350, 360) occupies a sub-unit of the second memory unit (300).

8. The network entity (800) according to claim 7, wherein the network entity (800) is further operative to perform the method according to any one of the claims 2-6.

9. A computer program (805) comprising instructions, which, when executed by at least one processing circuitry (803) of a network entity (800), causes the network entity (800) to perform the method according to any one of the claims 1-6.

10. A carrier containing the computer program (805) according to claim 9, wherein the carrier is one of an electronic signal, an optical signal, a radio signal, an electric signal, or a computer readable storage medium.
